# EUROPEAN PATENT SPECIFICATION

(11) **EP 3 286 858 B1**
(45) Date of publication and mention of the grant of the patent: **09.10.2019**
(21) Application number: 15890120.7
(22) Date of filing: 24.04.2015
(51) Int. Cl.: G05D 1/00, H02H 3/05, H04B 3/60, E21B 41/04, B63G 8/00

(54) **REMOTELY OPERATED VEHICLE CONTROL COMMUNICATION SYSTEM AND METHOD OF USE**
FERNBETRIEBENES FAHRZEUGSTEUERUNGSÜBERTRAGUNGSSYSTEM UND VERFAHREN ZUR VERWENDUNG
SYSTÈME DE COMMUNICATION DE COMMANDE DE VÉHICULE TÉLÉGUIDÉ ET PROCÉDÉ D'UTILISATION

(43) Date of publication of application: 28.02.2018
(73) Proprietor: Oceaneering International Inc., Houston, TX 77041 (US)
(72) Inventor: SRIVASTAVA, Govind Shul Dayal, Austin, Texas 78746 (US); BOYLE, Greg Robert, Camarillo, California 93010 (US)
(74) Representative: WP Thompson
(86) International application number: PCT/US2015/027553
(87) International publication number: WO 2016/171721

(56) References cited:
- US-A- 5 778 002
- US-A- 5 982 595
- US-A- 6 005 694
- US-A1- 2003 117 025
- US-A1- 2004 262 008
- US-A1- 2007 053 629
- US-A1- 2009 296 737
- US-A1- 2010 066 676
- US-A1- 2012 008 463
- US-A1- 2012 309 241
- US-A1- 2014 341 584

## Description

### FIELD OF THE INVENTION

The following relates generally to data transmission to and from a subsea remotely operated vehicle.

### BACKGROUND

Many issues are currently facing the remotely operated vehicle (ROV) market, including environmental challenges; complexity and variety of intervention services requiring configurable and scalable intervention capabilities; and increased video, telemetry and sensor needs requiring increased bandwidth and scalability. Improved reliability and operability by design and selection may include new and/or optimized systems and easier and faster diagnosis and repairs as well as integrated failure diagnostics and support for Ethernet based communications.

Generally, systems using slower data transmission speeds and their data protocols, e.g. RS-232, RS-422 or RS-485, boot up in seconds. However, systems using faster data transmission speeds and their protocols, e.g. Ethernet, take longer to boot which can be dangerous at depth and around structures, vessels, and the like. There is also an advantage in the redundant systems because in case one side goes down completely at least partial control of a subsea system and/or device may be accomplished via an alternative back-up system using different core technology.

Reference is made to US 2014/341584 A1, which discloses an apparatus which uses directly modulated InGaN Light-Emitting Diodes (LEDs) or InGaN lasers as the transmitters for an underwater data-communication device. The receiver uses automatic gain control to facilitate performance of the apparatus over a wide-range of distances and water turbidities.

Reference is also made to US 2003/117025, which discloses an underwater cable arrangement including systems and method for distributing and/or transferring power and/or data to internal devices and external devices disposed along an underwater cable. Under water coupling systems and underwater electrical devices may be used in the distribution and/or transfer of the power and/or data.

Additionally, reference is made to US 2004/262008, which discloses a subsea communications module including an interface to communicate with a surface facility over a communications link using a packet-based protocol. The communications link can be implemented with a fiber optic line, wire-based line, and/or other types of communications lines.

### FIGURES

The figures supplied herein disclose various embodiments of the claimed inventions.
**Fig. 1** is a block diagram of an exemplary subsea system;
**Fig. 2** is a block diagram of an exemplary remotely operated vehicle control communication system;
**Fig. 3** is a block diagram of exemplary components of the remotely operated vehicle control communication system;
**Fig. 4** is a block diagram of exemplary components of the remotely operated vehicle control communication system; and
**Fig. 5** is a block diagram of exemplary components of the remotely operated vehicle control communication system.

### DESCRIPTION OF VARIOUS EMBODIMENTS

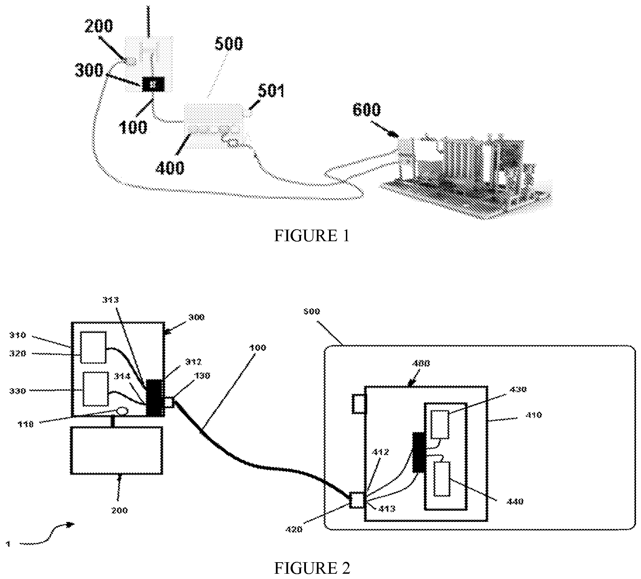

Referring now to **Fig. 1****,** control system 1 comprises signal transmission pathway 100 configured for use subsea with a first data transmission protocol at a first data transmission speed and with a second data transmission protocol at a second data transmission speed, either separately or concurrently; system controller 200; first data communication module 300; and remotely operated vehicle module 400.

First data communication module 300 and remotely operated vehicle module 400 typically comprise a scalable modular design which may be configured to be set up prior to deployment to support the first data transmission protocol and the second data transmission
protocol operating concurrently and independently on signal transmission pathway 100. In other embodiments, first data communication module 300 and remotely operated vehicle module 400 comprise a scalable modular design configured to be set up prior to deployment to support the first data transmission protocol and the second data transmission protocol operating sequentially on the same signal transmission pathway 100.

The first data transmission protocol typically comprises RS232, RS-422 or RS-485 at first data transmission speeds of up to 56 kilobaud and the second data transmission protocol typically comprises Ethernet at second data transmission speeds of up to 1 gigabit. These speeds are merely exemplary, however.

First data communication module 300 comprises first housing 310; first data connector 312 configured to operatively couple with signal transmission pathway 100; first signal protocol transceiver 320; and second signal protocol transceiver 330.

First data connector 312 comprises a first set of connections 313 operative at the first data transmission speed and a second set of connections 314 operative at the second data transmission speed.

First signal protocol transceiver 320 is disposed at least partially within first housing 310 and is operatively in communication with first data connector 312, e.g. via first set of connections 313, and system controller 200. First signal protocol transceiver 320 is configured to use a first data protocol at the first data transmission speed over signal transmission pathway 100.

Second signal protocol transceiver 330 is disposed at least partially within first housing 310 and is operatively in communication with first data connector 312, e.g. via second set of connections 314, and system controller 200. Second signal protocol transceiver 330 is configured to use a second data protocol at the second data transmission speed which is faster than the first data transmission speed over signal transmission pathway 100.

Remotely operated vehicle module 400 comprises second housing 410 configured to be disposed at least partially within remotely operated vehicle (ROV) 500 and is configured for use subsea; second data connector 420; third signal protocol transceiver 430; and fourth signal protocol transceiver 440. In embodiments, each of third signal protocol transceiver 430 and fourth signal protocol transceiver 440 may further comprise atmospherically adjusted containers, e.g. one atmosphere containers.

Second data connector 420 is configured to operatively couple with signal transmission pathway 100 and comprises a third set of connections 412 operative at the first data transmission speed and a fourth set of connections 413 operative at the second data transmission speed.

Third signal protocol transceiver 430 is disposed at least partially within second housing 410 and is operatively in communication with second data connector 420 via third set of connections 412, signal transmission pathway 100, and, when connected to signal transmission pathway 100, first signal protocol transceiver 230. Third signal protocol transceiver 430 is configured to use the first data protocol at the first data transmission speed over signal transmission pathway 100 and further configured to operatively interface with a first device subsea. By way of example and not limitation, remotely operated vehicle module 400 may comprise power module 401 as the first device subsea or as part of the first device subsea.

Fourth signal protocol transceiver 440 is disposed at least partially within second housing 410 and is operatively in communication with second data connector 420 via fourth set of connections 413, signal transmission pathway 100, and second signal protocol transceiver 420. Fourth signal protocol transceiver 440 is configured to use the second data protocol at the second data transmission speed over signal transmission pathway 100 and is further configured to operatively interface with a second device subsea, e.g. a video camera, sonar, or tooling.

First data connector 312 and second data connector 420 may be further configured such that how they interface with signal transmission pathway 100 determines which data protocol each will support via signal transmission pathway 100.

Signal transmission pathway 100 typically comprises fiber. Where fiber is used, fiber multiplex system 130 may be present and operatively in communication with data controller 120.

Data transmission sensor 110 may be present and operatively in communication with data controller 120. Data controller 120 is typically configured to selectively effect data communications via only first signal protocol transceiver 320 and third signal protocol transceiver 430, only second signal protocol transceiver 330 and fourth signal protocol transceiver 440, or concurrently over both first signal protocol transceiver 320 and third signal protocol transceiver 430 and second signal protocol transceiver 330 and fourth signal protocol transceiver 440, each at their respective data transmission speeds using their respective data transmission protocols.

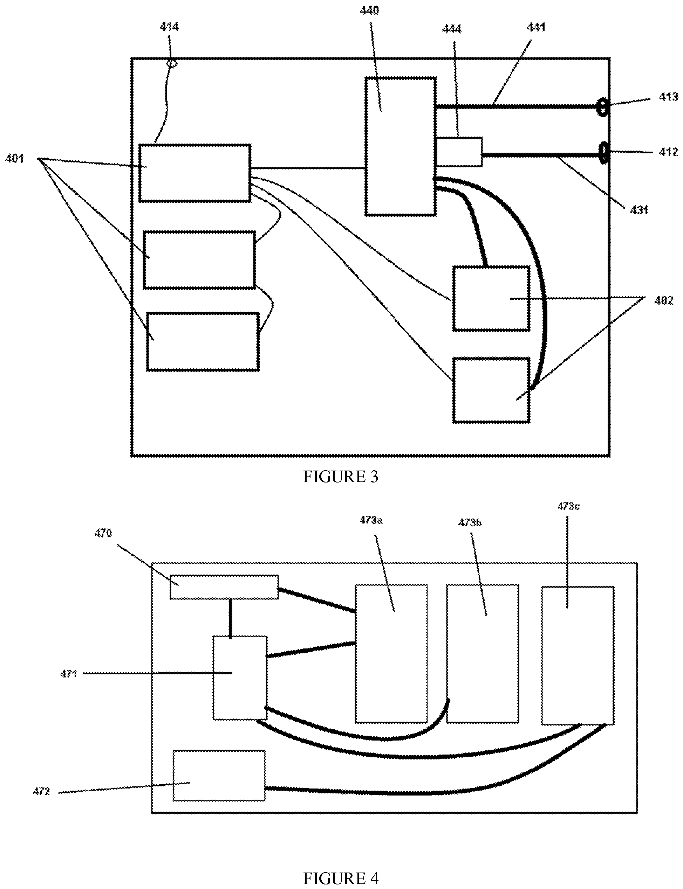

Referring now to **Fig. 3****,** one or more power supplies 401. In typical configurations, these power supplies obtain electrical power from ROV 100, e.g. at power connector 414, and then distribute the power to one or more signal protocol transceivers such as fourth signal protocol transceiver 440. One or more fourth signal protocol transceivers 440 is connected, such as by cable 441, to fourth set of connections 413 and/or third set of connections 412. In certain embodiments, each of fourth set of connections 413 and third set of connections 412 comprises a set of connectors such as pins which operate to provide either Ethernet or similar signaling, e.g. RJ-45, or serial or similar signaling, e.g. RS-232. Thus, although connector sets 412,413 may be identical, the signaling they carry can vary. By way of example and not limitation, fourth set of connections 413 may be prewired for RJ45 connections and cable 441 can function as a twisted pair Ethernet cable. Similarly, third set of connections 412 may be prewired for serial connections such as RS-232 or RS-422 and cable 431 can function as a serial data cable.

In certain embodiments, fast-to-slow protocol converter 444 may be disposed intermediate fourth signal protocol transceivers 440 and a member of the set of connections 412, 413.

One or more fuses 402 may be present and operatively disposed intermediate a signal protocol transceiver.

Referring now to **Fig. 4****,** terminator and transformer 470 may be disposed in ROV 100 and provide power distribution to modules within ROV 100, including one or more power units 472. Communications controller 471 can be similarly disposed and be in communication with one or more sensor modules 473a-473c which can be modular and interchanged such as prior to deployment. Sensor modules 473a-473c may be configured to use the first data transmission protocol at the first data transmission speed, the second data transmission protocol at the second data transmission speed, or either.

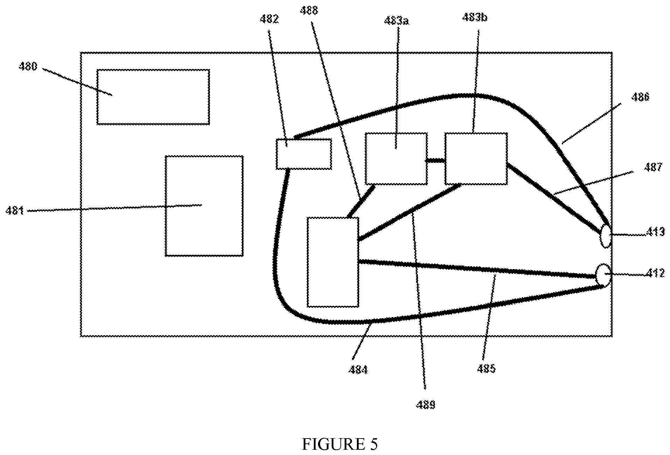

Referring additionally to **Fig. 5****,** power unit 480 can be disposed remotely operated vehicle module 400 and provide power to one or more components in remotely operated vehicle module 400. Communication controller 481 may be present and monitor status of various components such as multiplexer 482 and/or one or more telemetry modules 483a-483b. In embodiments, telemetry modules 483a-483b are modular and can be selected and configured such as prior to deployment. In addition, telemetry modules 483a-483b may be provided with serial data communications handling ability, such as for RS-232, RS-422, RS-485, and the like; with faster data communications handling ability, such as for Ethernet; or the like; or a combination thereof. Various internal data signal pathways such as signal pathway 484, signal pathway 485, signal pathway 486, and signal pathway 487 are typically used to interconnect the various components.

**In the operation of exemplary embodiments,** communications between ROV 500 and a system remote from ROV 500 may be effected by operatively connecting ROV 500 and a system remote from ROV 500 using control system 1, which is as described above. Once connected, transceivers 320 and/or 330 are operatively interconnected to transceivers 430 and 440, respectively, over signal transmission pathway 100 to selectively provide data transmission between ROV 500 and the system remote from ROV 500 at their respective data transmission speeds. Typically, the first data protocol is used to communicate with a core ROV system at the first data transmission speed, e.g. 9600 to 56000 baud, and the second data protocol used to communicate with less important systems and/or a subsea tool at the second data transmission speed, e.g. tool 501 illustrated as part of subsea package 600. If fiber is used, the differing protocols may use differing light wavelengths.

A state of ROV 500 may be monitored in real time, such as by using data transmission sensor 110 and data controller 120. If a first predetermined state event occurs, e.g. a data failure or data error rate in excess of a predetermined limit, data transmission may be switched over to, or exclusively to, first signal protocol transceiver 320 and third signal protocol transceiver 430 to provide an alternative data signaling pathway. This can also occur if the predetermined state event comprises a need to reboot ROV 500 or reboot or otherwise restart any other system operatively in communication with ROV 500. In other embodiments, the predetermined state event may comprise a need to bring an offline ROV system or other offline system operatively in communication with ROV 500 back on line after they have been in "off-power" or "low-power" mode.

The state of ROV 500 may continue to be monitored and, if a second predetermined state event occurrence is detected, use of first signal protocol transceiver 320 and third signal protocol transceiver 330 may be discontinued, either totally or partially, to provide a further alternative data signaling pathway upon detection of the second predetermined state event occurrence. This can include resuming data transmission using second signal protocol transceiver 230 and fourth signal protocol transceiver 440, either exclusively or in combination with first signal protocol transceiver 320 and third signal protocol transceiver 330.

In certain embodiments, first signal protocol transceiver 320 and third signal protocol transceiver 330 are transmitting at the first data transmission speed and, concurrently, second signal protocol transceiver 230 and fourth signal protocol transceiver 440 are transmitting at the second data transmission speed over signal transmission pathway 100. In certain of these embodiments, first signal protocol transceiver 320 and third signal protocol transceiver 330 may be cross-connected with second signal protocol transceiver 230 and fourth signal protocol transceiver 440 for diagnostics information subsea.

In other embodiments, only the second data protocol at the second data transmission speed is enabled, e.g. only second signal protocol transceiver 230 and fourth signal protocol transceiver 440 are used. However, fast protocol to slow protocol module 444 may be added and used to allow slow protocol data transmission. The allowed slow protocol data transmission typically comprises RS-232, RS-422, RS-485, or the like.

The foregoing disclosure and description of the invention is illustrative and explanatory. Various changes in the size, shape, and materials, as well as in the details of the illustrative construction and/or an illustrative method may be made without departing from the scope of the appended claims.

## Claims

1. A remotely operated vehicle control communication system, comprising:
a. a signal transmission pathway (100) configured for use subsea at a first data transmission speed and at a second data transmission speed, either separately or concurrently, the signal transmission pathway comprising a solid material;
b. a system controller (200);
c. a first data communication module (300), comprising:
i. a first housing (310);
ii. a first data connector (312) configured to operatively couple with the signal transmission pathway (100), the first data connector (312) comprising a first set of connections (313) operative at the first data transmission speed and a second set of connections (314) operative at the second data transmission speed;
iii. a first signal protocol transceiver (320) disposed at least partially within the first housing (310) and operatively in communication with the first data connector (312) and the system controller (200), the first signal protocol transceiver (320) configured to use a first data protocol at the first data transmission speed over the signal transmission pathway (100);
iv. a second signal protocol transceiver (330) disposed at least partially within the first housing (310) and operatively in communication with the first data connector (312) and the system controller (200), the second signal protocol transceiver (330) configured to use a second data protocol at the second data transmission speed faster than the first data transmission speed over the signal transmission pathway (100); and
d. a remotely operated vehicle module (400), comprising:
i. a second housing (410) configured to be disposed at least partially within a remotely operated vehicle, the second housing (410) further configured for use subsea;
ii. a second data connector (420) configured to operatively couple with the signal transmission pathway (100), the second data connector (420) comprising a third set of connections (412) operative at the first data transmission speed and a fourth set of connections (413) operative at the second data transmission speed;
iii. a third signal protocol transceiver (430) disposed at least partially within the second housing (410) and operatively in communication with the second data connector (420), the signal transmission pathway (100), and the first signal protocol transceiver (320), the third signal protocol transceiver (430) configured to use the first data protocol at the first data transmission speed over the signal transmission pathway (100), the third signal protocol transceiver (430) further configured to operatively interface with a first device subsea (410,501,600); and
iv. a fourth signal protocol transceiver (440) disposed at least partially within the second housing (410) operatively in communication with the second data connector (420), the signal transmission pathway (100), and the second signal protocol transceiver, the fourth signal protocol transceiver (440) configured to use the second data protocol at the second data transmission speed over the signal transmission pathway (100), the fourth signal protocol transceiver (440) further configured to operatively interface with a second device subsea.

2. The remotely operated vehicle control communication system of Claim 1, wherein the signal transmission pathway (100) comprises fiber.

3. The remotely operated vehicle control communication system of Claim 1, wherein the first signal protocol transceiver (320) and third signal protocol transceiver (430) are configured to use at least one of RS232, RS-422 or RS-485.

4. The remotely operated vehicle control communication system of Claim 1, wherein the second signal protocol transceiver (330) and fourth signal protocol transceiver (440) are configured to use Ethernet.

5. The remotely operated vehicle control communication system of Claim 1, further comprising:
a. a data transmission sensor (110); and
b. a data controller (200) operatively in communication with the data transmission sensor (110) and configured to selectively effect data communications via only the first and third signal protocol transceivers (320,430), only the second and fourth signal protocol transceivers (330,440), or concurrently over both the first and third signal protocol transceivers (320,430) and the second and fourth signal protocol transceivers (330,440); and, optionally,
a fiber multiplex system (130) operatively in communication with the data controller (200).

6. The remotely operated vehicle control communication system of Claim 1, wherein:
a. the remotely operated vehicle module (400) comprises a power module (401); and
b. the first device subsea comprises the power module (401).

7. The remotely operated vehicle control communication system of Claim 1, wherein the first data communication module (300) and the remotely operated vehicle module (400) comprise a scalable modular design configured to be set up prior to deployment to support the first and second data signals operating concurrently and independently on the signal transmission pathway (100).

8. The remotely operated vehicle control communication system of Claim 1, wherein the first and third protocol transceivers (320,430) comprise a scalable modular design configured to be set up prior to deployment to support the first and second data signals operating sequentially on the same signal transmission pathway (100).

9. The remotely operated vehicle control communication system of Claim 1, wherein the first data connector (312) and the second data connector (420) are further configured such that how they interface with the signal transmission pathway (100) determines which protocol the first data connector (312) and the second data connector (420) will support via the signal transmission pathway (100).

10. A method of communicating between a remotely operated vehicle (ROV) and a system remote from the ROV, comprising:
a. operatively connecting a remotely operated vehicle (ROV) (500) and a system remote from the ROV using a control system (1), the control system comprising:
i. a signal transmission pathway (100) configured for use subsea at a first data transmission speed and at a second data transmission speed, either separately or concurrently, the signal transmission pathway comprising a solid material;
ii. a system controller (200);
iii. a first data communication module (300), comprising:
1. a first housing (310);
2. a first data connector (312) configured to operatively couple with the signal transmission pathway (100), the first data connector (312) comprising a first set of connections (313) operative at the first data transmission speed and a second set of connections (314) operative at the second data transmission speed;
3. a first signal protocol transceiver (320) disposed at least partially within the first housing (310) and operatively in communication with the first data connector (312) and the system controller (200), the first signal protocol transceiver (320) configured to use a first data protocol at the first data transmission speed over the signal transmission pathway (100);
4. a second signal protocol transceiver (330) disposed at least partially within the first housing (310) and operatively in communication with the first data connector (312) and the system controller (200), the second signal protocol transceiver (330) configured to use a second data protocol at the second data transmission speed faster than the first data transmission speed over the signal transmission pathway (100); and
iv. a remotely operated vehicle module (400), comprising:
1. a second housing (410) configured to be disposed at least partially within a remotely operated vehicle (500), the second housing (410) further configured for use subsea;
2. a second data connector (420) configured to operatively couple with the signal transmission pathway (100), the second data connector (420) comprising a third set of connections (412) operative at the first data transmission speed and a fourth set of connections (413) operative at the second data transmission speed;
3. a third signal protocol transceiver (430) disposed at least partially within the second housing (410) and operatively in communication with the second data connector (420), the remotely operated vehicle module (400), and the first signal protocol transceiver (320), the third signal protocol transceiver (430) configured to use the first data protocol at the first data transmission speed over the signal transmission pathway (100), the third signal protocol transceiver (430) further configured to operatively interface with a first device subsea; and
4. a fourth signal protocol transceiver (440) disposed at least partially within the second housing (410) operatively in communication with the second data connector (420), the remotely operated vehicle module (400), and the second signal protocol transceiver, the fourth signal protocol transceiver (440) configured to use the second data protocol at the second data transmission speed over the signal transmission pathway (100), the fourth signal protocol transceiver (440) further configured to operatively interface with a second device subsea; and
b. using the transceivers (320,330,430,440) in the first data communication module (300) and the remotely operated vehicle module (400) to selectively provide data transmission between the ROV (500) and the system remote from the ROV at their respective data transmission speeds.

11. The method of communicating between a remotely operated vehicle (ROV) and a system remote from the ROV of Claim 10, further comprising:
a. monitoring a state of the ROV (500) in real time; and
b. using the first signal protocol transceiver (320) and the third signal protocol transceiver (430) to provide an alternative data signaling pathway if a first predetermined state event occurs; and, optionally,
wherein the predetermined state event comprises a need to reboot the ROV (500) or any other system operatively in communication with the ROV (500); or
wherein the predetermined state event comprises a need to bring an offline ROV system or offline system operatively in communication with the ROV (500) back on line after they have been in "off-power" or "low-power" mode.

12. The method of communicating between a remotely operated vehicle (ROV) and a system remote from the ROV of Claim 10, further comprising:
a. continuing to monitor a state of the ROV (500);
b. detecting a second predetermined state event occurrence; and
c. discontinuing using the first signal protocol transceiver (320) and the third signal protocol transceiver (430) to provide an alternative data signaling pathway upon detection of the second predetermined state event occurrence.

13. The method of communicating between a remotely operated vehicle (ROV) and a system remote from the ROV of Claim 10, further comprising:
a. concurrently using the first signal protocol transceiver (320) and the third signal protocol transceiver (430) at the first data transmission speed and the second signal protocol transceiver (330) and the fourth signal protocol transceiver (440) at the second data transmission speed; and
b. cross-connecting the first and third signal protocol transceivers (320,430) with the second and fourth signal protocol transceivers (330,440) for diagnostics information subsea.

14. The method of communicating between a remotely operated vehicle (ROV) and a system remote from the ROV of Claim 10, further comprising:
a. enabling only the second data protocol at the second data transmission speed;
b. adding a fast protocol to slow protocol module (444); and
c. using the fast protocol to slow protocol module (444) to allow slow protocol data transmission; and, optionally,
wherein the allowed slow protocol data transmission comprises RS-232, RS-422, or RS-485.

15. The method of communicating between a remotely operated vehicle (ROV) and a system remote from the ROV of Claim 10, further comprising:
a. using the first data protocol to communicate with a core ROV system at the first data transmission speed;
b. using the first data protocol to communicate with a tool (501) subsea at the first data transmission speed; and
c. using the second data protocol to communicate with less important systems at the second data transmission speed.

## Patentansprüche

1. Fernbetriebenes Fahrzeugsteuerkommunikationssystem, umfassend:
a. einen Signalübertragungsweg (100), der zur Verwendung unter Wasser mit einer ersten Datenübertragungsgeschwindigkeit und mit einer zweiten Datenübertragungsgeschwindigkeit, entweder separat oder gleichzeitig, konfiguriert ist, wobei der Signalübertragungsweg ein festes Material umfasst;
b. eine Systemsteuerung (200);
c. ein erstes Datenkommunikationsmodul (300), umfassend:
i. ein erstes Gehäuse (310);
ii. einen ersten Datenverbinder (312), der zur betriebsfähigen Kopplung mit dem Signalübertragungsweg (100) konfiguriert ist, wobei der erste Datenverbinder (312) einen ersten Satz Verbindungen (313), die mit der ersten Datenübertragungsgeschwindigkeit betriebsfähig sind, und einen zweiten Satz Verbindungen (314), die mit der zweiten Datenübertragungsgeschwindigkeit betriebsfähig sind, umfasst;
iii. einen ersten Signalprotokoll-Transceiver (320), der mindestens teilweise innerhalb des ersten Gehäuses (310) angeordnet ist und betriebsfähig mit dem ersten Datenverbinder (312) und der Systemsteuerung (200) in Kommunikation ist, wobei der erste Signalprotokoll-Transceiver (320) zum Verwenden eines ersten Datenprotokolls mit der ersten Datenübertragungsgeschwindigkeit über den Signalübertragungsweg (100) konfiguriert ist;
iv. einen zweiten Signalprotokoll-Transceiver (330), der mindestens teilweise innerhalb des ersten Gehäuses (310) angeordnet ist und betriebsfähig mit dem ersten Datenverbinder (312) und der Systemsteuerung (200) in Kommunikation ist, wobei der zweite Signalprotokoll-Transceiver (330) zum Verwenden eines zweiten Datenprotokolls mit der zweiten Datenübertragungsgeschwindigkeit, die schneller als die erste Datenübertragungsgeschwindigkeit ist, über den Signalübertragungsweg (100) konfiguriert ist; und
d. ein fernbetriebenes Fahrzeugmodul (400), umfassend:
i. ein zweites Gehäuse (410), das konfiguriert ist, um mindestens teilweise innerhalb eines fernbetriebenen Fahrzeugs angeordnet zu sein, wobei das zweite Gehäuse (410) ferner zur Verwendung unter Wasser konfiguriert ist;
ii. einen zweiten Datenverbinder (420), der zur betriebsfähigen Kopplung mit dem Signalübertragungsweg (100) konfiguriert ist, wobei der zweite Datenverbinder (420) einen dritten Satz Verbindungen (412), die mit der ersten Datenübertragungsgeschwindigkeit betriebsfähig sind, und einen vierten Satz Verbindungen (413), die mit der zweiten Datenübertragungsgeschwindigkeit betriebsfähig sind, umfasst;
iii. einen dritten Signalprotokoll-Transceiver (430), der mindestens teilweise innerhalb des zweiten Gehäuses (410) angeordnet ist und betriebsfähig mit dem zweiten Datenverbinder (420), dem Signalübertragungsweg (100) und dem ersten Signalprotokoll-Transceiver (320) in Kommunikation ist, wobei der dritte Signalprotokoll-Transceiver (430) zum Verwenden des ersten Datenprotokolls mit der ersten Datenübertragungsgeschwindigkeit über den Signalübertragungsweg (100) konfiguriert ist, wobei der dritte Signalprotokoll-Transceiver (430) ferner konfiguriert ist, um mit einer ersten Vorrichtung unter Wasser (410, 501, 600) betriebsfähig eine Schnittstelle herzustellen; und
iv. einen vierten Signalprotokoll-Transceiver (440), der mindestens teilweise innerhalb des zweiten Gehäuses (410) angeordnet ist, betriebsfähig mit dem zweiten Datenverbinder (420), dem Signalübertragungsweg (100) und dem zweiten Signalprotokoll-Transceiver in Kommunikation ist, wobei der vierte Signalprotokoll-Transceiver (440) zum Verwenden des zweiten Datenprotokolls mit der zweiten Datenübertragungsgeschwindigkeit über den Signalübertragungsweg (100) konfiguriert ist, wobei der vierte Signalprotokoll-Transceiver (440) ferner konfiguriert ist, um mit einer zweiten Vorrichtung unter Wasser betriebsfähig eine Schnittstelle herzustellen.

2. Fernbetriebenes Fahrzeugsteuerkommunikationssystem nach Anspruch 1, wobei der Signalübertragungsweg (100) Fasern umfasst.

3. Fernbetriebenes Fahrzeugsteuerkommunikationssystem nach Anspruch 1, wobei der erste Signalprotokoll-Transceiver (320) und der dritte Signalprotokoll-Transceiver (430) konfiguriert sind, um mindestens eines von RS232, RS-422 oder RS-485 zu verwenden.

4. Fernbetriebenes Fahrzeugsteuerkommunikationssystem nach Anspruch 1, wobei der zweite Signalprotokoll-Transceiver (330) und der vierte Signalprotokoll-Transceiver (440) konfiguriert sind, um Ethernet zu verwenden.

5. Fernbetriebenes Fahrzeugsteuerkommunikationssystem nach Anspruch 1, ferner umfassend:
a. einen Datenübertragungssensor (110); und
b. eine Datensteuerung (200), die betriebsfähig mit dem Datenübertragungssensor (110) in Kommunikation ist und konfiguriert ist, um selektiv Datenkommunikationen nur über den ersten und den dritten Signalprotokoll-Transceiver (320, 430), nur den zweiten und den vierten Signalprotokoll-Transceiver (330, 440) oder gleichzeitig über sowohl den ersten und den dritten Signalprotokoll-Transceiver (320, 430) als auch den zweiten und den vierten Signalprotokoll-Transceiver (330, 440) zu bewirken; und optional
ein Fasermultiplexsystem (130), das betriebsfähig mit der Datensteuerung (200) in Kommunikation ist.

6. Fernbetriebenes Fahrzeugsteuerkommunikationssystem nach Anspruch 1, wobei:
a. das fernbetriebene Fahrzeugmodul (400) ein Leistungsmodul (401) umfasst; und
b. die erste Vorrichtung unter Wasser das Leistungsmodul (401) umfasst.

7. Fernbetriebenes Fahrzeugsteuerkommunikationssystem nach Anspruch 1, wobei das erste Datenkommunikationsmodul (300) und das fernbetriebene Fahrzeugmodul (400) ein skalierbares modulares Design umfassen, das konfiguriert ist, um vor dem Einsatz eingerichtet zu werden, um die ersten und zweiten Datensignale zu unterstützen, die gleichzeitig und unabhängig auf dem Signalübertragungsweg (100) verkehren.

8. Fernbetriebenes Fahrzeugsteuerkommunikationssystem nach Anspruch 1, wobei der erste und der dritte Signalprotokoll-Transceiver (320, 430) ein skalierbares modulares Design umfassen, das konfiguriert ist, um vor dem Einsatz eingerichtet zu werden, um die ersten und zweiten Datensignale zu unterstützen, die nacheinander auf demselben Signalübertragungsweg (100) verkehren.

9. Fernbetriebenes Fahrzeugsteuerkommunikationssystem nach Anspruch 1, wobei der erste Datenverbinder (312) und der zweite Datenverbinder (420) ferner so konfiguriert sind, dass, wie sie mit dem Signalübertragungsweg (100) eine Schnittstelle bilden, bestimmt, welches Protokoll der erste Datenverbinder (312) und der zweite Datenverbinder (420) über den Signalübertragungsweg (100) unterstützen werden.

10. Verfahren zum Kommunizieren zwischen einem fernbetriebenen Fahrzeug (ROV = Remotely Operated Vehicle) und einem von dem ROV entfernten System, umfassend:
a. betriebsfähiges Verbinden eines fernbetriebenen Fahrzeugs (ROV) (500) und eines von dem ROV entfernten Systems unter Verwendung eines Steuersystems (1), wobei das Steuersystem Folgendes umfasst:
i. einen Signalübertragungsweg (100), der zur Verwendung unter Wasser mit einer ersten Datenübertragungsgeschwindigkeit und mit einer zweiten Datenübertragungsgeschwindigkeit, entweder separat oder gleichzeitig, konfiguriert ist, wobei der Signalübertragungsweg ein festes Material umfasst;
ii. eine Systemsteuerung (200);
iii. ein erstes Datenkommunikationsmodul (300), umfassend:
1. ein erstes Gehäuse (310);
2. einen ersten Datenverbinder (312), der zur betriebsfähigen Kopplung mit dem Signalübertragungsweg (100) konfiguriert ist, wobei der erste Datenverbinder (312) einen ersten Satz Verbindungen (313), die mit der ersten Datenübertragungsgeschwindigkeit betriebsfähig sind, und einen zweiten Satz Verbindungen (314), die mit der zweiten Datenübertragungsgeschwindigkeit betriebsfähig sind, umfasst;
3. einen ersten Signalprotokoll-Transceiver (320), der mindestens teilweise innerhalb des ersten Gehäuses (310) angeordnet ist und betriebsfähig mit dem ersten Datenverbinder (312) und der Systemsteuerung (200) in Kommunikation ist, wobei der erste Signalprotokoll-Transceiver (320) zum Verwenden eines ersten Datenprotokolls mit der ersten Datenübertragungsgeschwindigkeit über den Signalübertragungsweg (100) konfiguriert ist;
4. einen zweiten Signalprotokoll-Transceiver (330), der mindestens teilweise innerhalb des ersten Gehäuses (310) angeordnet ist und betriebsfähig mit dem ersten Datenverbinder (312) und der Systemsteuerung (200) in Kommunikation ist, wobei der zweite Signalprotokoll-Transceiver (330) zum Verwenden eines zweiten Datenprotokolls mit der zweiten Datenübertragungsgeschwindigkeit, die schneller als die erste Datenübertragungsgeschwindigkeit ist, über den Signalübertragungsweg (100) konfiguriert ist; und
iv. ein fernbetriebenes Fahrzeugmodul (400), umfassend:
1. ein zweites Gehäuse (410), das konfiguriert ist, um mindestens teilweise innerhalb eines fernbetriebenen Fahrzeugs (500) angeordnet zu sein, wobei das zweite Gehäuse (410) ferner zur Verwendung unter Wasser konfiguriert ist;
2. einen zweiten Datenverbinder (420), der zur betriebsfähigen Kopplung mit dem Signalübertragungsweg (100) konfiguriert ist, wobei der zweite Datenverbinder (420) einen dritten Satz Verbindungen (412), die mit der ersten Datenübertragungsgeschwindigkeit betriebsfähig sind, und einen vierten Satz Verbindungen (413), die mit der zweiten Datenübertragungsgeschwindigkeit betriebsfähig sind, umfasst;
3. einen dritten Signalprotokoll-Transceiver (430), der mindestens teilweise innerhalb des zweiten Gehäuses (410) angeordnet ist und betriebsfähig mit dem zweiten Datenverbinder (420), dem fernbetriebenen Fahrzeugmodul (400) und dem ersten Signalprotokoll-Transceiver (320) in Kommunikation ist, wobei der dritte Signalprotokoll-Transceiver (430) zum Verwenden des ersten Datenprotokolls mit der ersten Datenübertragungsgeschwindigkeit über den Signalübertragungsweg (100) konfiguriert ist, wobei der dritte Signalprotokoll-Transceiver (430) ferner konfiguriert ist, um mit einer ersten Vorrichtung unter Wasser betriebsfähig eine Schnittstelle herzustellen; und
4. einen vierten Signalprotokoll-Transceiver (440), der mindestens teilweise innerhalb des zweiten Gehäuses (410) angeordnet ist, betriebsfähig mit dem zweiten Datenverbinder (420), dem fernbetriebenen Fahrzeugmodul (400) und dem zweiten Signalprotokoll-Transceiver in Kommunikation ist, wobei der vierte Signalprotokoll-Transceiver (440) zum Verwenden des zweiten Datenprotokolls mit der zweiten Datenübertragungsgeschwindigkeit über den Signalübertragungsweg (100) konfiguriert ist, wobei der vierte Signalprotokoll-Transceiver (440) ferner konfiguriert ist, um mit einer zweiten Vorrichtung unter Wasser betriebsfähig eine Schnittstelle herzustellen; und
b. Verwenden der Transceiver (320, 330, 430, 440) in dem ersten Datenkommunikationsmodul (300) und dem fernbetriebenen Fahrzeugmodul (400), um selektiv Datenübertragungen zwischen dem ROV (500) und dem von dem ROV entfernten System bei ihren entsprechenden Datenübertragungsgeschwindigkeiten bereitzustellen.

11. Verfahren zum Kommunizieren zwischen einem fernbetriebenen Fahrzeug (ROV) und einem von dem ROV entfernten System nach Anspruch 10, ferner umfassend:
a. Überwachen eines Zustands des ROV (500) in Echtzeit; und
b. Verwenden des ersten Signalprotokoll-Transceivers (320) und des dritten Signalprotokoll-Transceivers (430), um einen alternativen Datensignalweg bereitzustellen, falls ein erstes vorgegebenes Zustandsereignis auftritt; und optional
wobei das vorgegebene Zustandsereignis ein Erfordernis zum Neustarten des ROV (500) oder eines beliebigen anderen Systems, das betriebsfähig mit dem ROV (500) in Kommunikation ist, umfasst; oder
wobei das vorgegebene Zustandsereignis ein Erfordernis umfasst, ein Offline-ROV-System oder Offline-System, das betriebsfähig mit dem ROV (500) in Kommunikation ist, wieder online zu bringen, nachdem sie in einem "Aus-Modus" oder einem "Niedrigverbrauchsmodus" waren.

12. Verfahren zum Kommunizieren zwischen einem fernbetriebenen Fahrzeug (ROV) und einem von dem ROV entfernten System nach Anspruch 10, ferner umfassend:
a. Fortsetzen des Überwachens eines Zustands des ROV (500);
b. Erfassen des Auftretens eines zweiten vorgegebenen Zustandsereignisses; und
c. Nicht-Fortsetzen des Verwendens des ersten Signalprotokoll-Transceivers (320) und des dritten Signalprotokoll-Transceivers (430), um einen alternativen Datensignalweg bereitzustellen, nachdem das Auftreten des zweiten vorgegebenen Zustandsereignisses erfasst wurde.

13. Verfahren zum Kommunizieren zwischen einem fernbetriebenen Fahrzeug (ROV) und einem von dem ROV entfernten System nach Anspruch 10, ferner umfassend:
a. gleichzeitiges Verwenden des ersten Signalprotokoll-Transceivers (320) und des dritten Signalprotokoll-Transceivers (430) mit der ersten Datenübertragungsgeschwindigkeit und des zweiten Signalprotokoll-Transceivers (330) und des vierten Signalprotokoll-Transceivers (440) mit der zweiten Datenübertragungsgeschwindigkeit; und
b. Querverbinden des ersten und des dritten Signalprotokoll-Transceivers (320, 430) mit dem zweiten und dem vierten Signalprotokoll-Transceiver (330, 440) für Diagnoseinformationen unter Wasser.

14. Verfahren zum Kommunizieren zwischen einem fernbetriebenen Fahrzeug (ROV) und einem von dem ROV entfernten System nach Anspruch 10, ferner umfassend:
a. Aktivieren nur des zweiten Datenprotokolls mit der zweiten Datenübertragungsgeschwindigkeit;
b. Hinzufügen eines Schnellprotokoll-Langsamprotokoll-Moduls (444); und
c. Verwenden des Schnellprotokoll-Langsamprotokoll-Moduls (444), um Langsamprotokoll-Datenübertragung zu ermöglichen; und optional
wobei die Langsamprotokoll-Datenübertragung, die ermöglicht wurde, RS-232, RS-422 oder RS-485 umfasst.

15. Verfahren zum Kommunizieren zwischen einem fernbetriebenen Fahrzeug (ROV) und einem von dem ROV entfernten System nach Anspruch 10, ferner umfassend:
a. Verwenden des ersten Datenprotokolls, um mit einem Haupt-ROV-System mit der ersten Datenübertragungsgeschwindigkeit zu kommunizieren;
b. Verwenden des ersten Datenprotokolls, um mit einem Werkzeug (501) unter Wasser mit der ersten Datenübertragungsgeschwindigkeit zu kommunizieren; und
c. Verwenden des zweiten Datenprotokolls, um mit weniger wichtigen Systemen mit der zweiten Datenübertragungsgeschwindigkeit zu kommunizieren.

## Revendications

1. Système de communication de commande de véhicule télécommandé, comprenant :
a. une voie de transmission de signal (100) configurée pour une utilisation sous-marine à une première vitesse de transmission de données et à une seconde vitesse de transmission de données, soit séparément soit de manière concurrente, la voie de transmission de signal comprenant un matériau solide ;
b. un dispositif de commande de système (200) ;
c. un premier module de communication de données (300), comprenant :
i. un premier boîtier (310) ;
ii. un premier connecteur de données (312) configuré pour se coupler de manière fonctionnelle à la voie de transmission de signal (100), le premier connecteur de données (312) comprenant un premier ensemble de connexions (313) pouvant fonctionner à la première vitesse de transmission de données et un deuxième ensemble de connexions (314) pouvant fonctionner à la seconde vitesse de transmission de données ;
iii. un premier émetteur-récepteur de protocole de signal (320) disposé au moins partiellement à l'intérieur du premier boîtier (310) et en communication fonctionnelle avec le premier connecteur de données (312) et le dispositif de commande de système (200), le premier émetteur-récepteur de protocole de signal (320) configuré pour utiliser un premier protocole de données à la première vitesse de transmission de données sur la voie de transmission de signal (100) ;
iv. un deuxième émetteur-récepteur de protocole de signal (330) disposé au moins partiellement à l'intérieur du premier boîtier (310) et en communication fonctionnelle avec le premier connecteur de données (312) et le dispositif de commande de système (200), le deuxième émetteur-récepteur de protocole de signal (330) configuré pour utiliser un second protocole de données à la seconde vitesse de transmission de données plus rapide que la première vitesse de transmission de données sur la voie de transmission de signal (100) ; et
d. un module de véhicule télécommandé (400), comprenant :
i. un second boîtier (410) configuré pour être disposé au moins partiellement à l'intérieur d'un véhicule télécommandé, le second boîtier (410) configuré en outre pour une utilisation sous-marine ;
ii. un second connecteur de données (420) configuré pour se coupler de manière fonctionnelle à la voie de transmission de signal (100), le second connecteur de données (420) comprenant un troisième ensemble de connexions (412) pouvant fonctionner à la première vitesse de transmission de données et un quatrième ensemble de connexions (413) pouvant fonctionner à la seconde vitesse de transmission de données ;
iii. un troisième émetteur-récepteur de protocole de signal (430) disposé au moins partiellement à l'intérieur du second boîtier (410) et en communication fonctionnelle avec le second connecteur de données (420), la voie de transmission de signal (100), et le premier émetteur-récepteur de protocole de signal (320), le troisième émetteur-récepteur de protocole de signal (430) configuré pour utiliser le premier protocole de données à la première vitesse de transmission de données sur la voie de transmission de signal (100), le troisième émetteur-récepteur de protocole de signal (430) configuré en outre pour s'interfacer de manière fonctionnelle avec un premier dispositif sous-marin (410, 501, 600) ; et
iv. un quatrième émetteur-récepteur de protocole de signal (440) disposé au moins partiellement à l'intérieur du second boîtier (410) en communication fonctionnelle avec le second connecteur de données (420), la voie de transmission de signal (100), et le deuxième émetteur-récepteur de protocole de signal, le quatrième émetteur-récepteur de protocole de signal (440) configuré pour utiliser le second protocole de données à la seconde vitesse de transmission de données sur la voie de transmission de signal (100), le quatrième émetteur-récepteur de protocole de signal (440) configuré en outre pour s'interfacer de manière fonctionnelle avec un second dispositif sous-marin.

2. Système de communication de commande de véhicule télécommandé selon la revendication 1, dans lequel la voie de transmission de signal (100) comprend de la fibre.

3. Système de communication de commande de véhicule télécommandé selon la revendication 1, dans lequel le premier émetteur-récepteur de protocole de signal (320) et le troisième émetteur-récepteur de protocole de signal (430) sont configurés pour utiliser au moins une de RS232, RS-422 ou RS-485.

4. Système de communication de commande de véhicule télécommandé selon la revendication 1, dans lequel le deuxième émetteur-récepteur de protocole de signal (330) et le quatrième émetteur-récepteur de protocole de signal (440) sont configurés pour utiliser Ethernet.

5. Système de communication de commande de véhicule télécommandé selon la revendication 1, comprenant en outre :
a. un capteur de transmission de données (110) ; et
b. un dispositif de commande de données (200) en communication fonctionnelle avec le capteur de transmission de données (110) et configuré pour effectuer de manière sélective des communications de données par l'intermédiaire uniquement des premier et troisième émetteurs-récepteurs de protocoles de signaux (320, 430), uniquement des deuxième et quatrième émetteurs-récepteurs de protocoles de signaux (330, 440), ou de manière concurrente à la fois sur les premier et troisième émetteurs-récepteurs de protocoles de signaux (320, 430) et sur les deuxième et quatrième émetteurs-récepteurs de protocoles de signaux (330, 440) ; et, éventuellement,
un système de multiplexage à fibres (130) en communication fonctionnelle avec le dispositif de commande de données (200).

6. Système de communication de commande de véhicule télécommandé selon la revendication 1, dans lequel :
a. le module de véhicule télécommandé (400) comprend un module de puissance (401) ; et
b. le premier dispositif sous-marin comprend le module de puissance (401).

7. Système de communication de commande de véhicule télécommandé selon la revendication 1, dans lequel le premier module de communication de données (300) et le module de véhicule télécommandé (400) comprennent une conception modulaire adaptable configurée pour être installée avant un déploiement pour supporter les premier et second signaux de données fonctionnant de manière concurrente et indépendante sur la voie de transmission de signal (100).

8. Système de communication de commande de véhicule télécommandé selon la revendication 1, dans lequel les premier et troisième émetteurs-récepteurs de protocoles de signaux (320, 430) comprennent une conception modulaire adaptable configurée pour être installée avant un déploiement pour supporter les premier et second signaux de données fonctionnant de manière séquentielle sur la même voie de transmission de signal (100).

9. Système de communication de commande de véhicule télécommandé selon la revendication 1, dans lequel le premier connecteur de données (312) et le second connecteur de données (420) sont en outre configurés de telle sorte que la manière dont ils s'interfacent avec la voie de transmission de signal (100) détermine quel protocole le premier connecteur de données (312) et le second connecteur de données (420) supporteront par l'intermédiaire de la voie de transmission de signal (100).

10. Procédé de communication entre un véhicule télécommandé (ROV) et un système distant du ROV, comprenant :
a. une connexion fonctionnelle d'un véhicule télécommandé (ROV) (500) et d'un système distant du ROV en utilisant un système de commande (1), le système de commande comprenant :
i. une voie de transmission de signal (100) configurée pour une utilisation sous-marine à une première vitesse de transmission de données et à une seconde vitesse de transmission de données, soit séparément soit de manière concurrente, la voie de transmission de signal comprenant un matériau solide ;
ii. un dispositif de commande de système (200) ;
iii. un premier module de communication de données (300), comprenant :
1. un premier boîtier (310) ;
2. un premier connecteur de données (312) configuré pour se coupler de manière fonctionnelle à la voie de transmission de signal (100), le premier connecteur de données (312) comprenant un premier ensemble de connexions (313) pouvant fonctionner à la première vitesse de transmission de données et un deuxième ensemble de connexions (314) pouvant fonctionner à la seconde vitesse de transmission de données ;
3. un premier émetteur-récepteur de protocole de signal (320) disposé au moins partiellement à l'intérieur du premier boîtier (310) et en communication fonctionnelle avec le premier connecteur de données (312) et le dispositif de commande de système (200), le premier émetteur-récepteur de protocole de signal (320) configuré pour utiliser un premier protocole de données à la première vitesse de transmission de données sur la voie de transmission de signal (100) ;
4. un deuxième émetteur-récepteur de protocole de signal (330) disposé au moins partiellement à l'intérieur du premier boîtier (310) et en communication fonctionnelle avec le premier connecteur de données (312) et le dispositif de commande de système (200), le deuxième émetteur-récepteur de protocole de signal (330) configuré pour utiliser un second protocole de données à la seconde vitesse de transmission de données plus rapide que la première vitesse de transmission de données sur la voie de transmission de signal (100) ; et
iv. un module de véhicule télécommandé (400), comprenant :
1. un second boîtier (410) configuré pour être disposé au moins partiellement à l'intérieur d'un véhicule télécommandé (500), le second boîtier (410) configuré en outre pour une utilisation sous-marine ;
2. un second connecteur de données (420) configuré pour se coupler de manière fonctionnelle à la voie de transmission de signal (100), le second connecteur de données (420) comprenant un troisième ensemble de connexions (412) pouvant fonctionner à la première vitesse de transmission de données et un quatrième ensemble de connexions (413) pouvant fonctionner à la seconde vitesse de transmission de données ;
3. un troisième émetteur-récepteur de protocole de signal (430) disposé au moins partiellement à l'intérieur du second boîtier (410) et en communication fonctionnelle avec le second connecteur de données (420), le module de véhicule télécommandé (400), et le premier émetteur-récepteur de protocole de signal (320), le troisième émetteur-récepteur de protocole de signal (430) configuré pour utiliser le premier protocole de données à la première vitesse de transmission de données sur la voie de transmission de signal (100), le troisième émetteur-récepteur de protocole de signal (430) configuré en outre pour s'interfacer de manière fonctionnelle avec un premier dispositif sous-marin ; et
4. un quatrième émetteur-récepteur de protocole de signal (440) disposé au moins partiellement à l'intérieur du second boîtier (410) en communication fonctionnelle avec le second connecteur de données (420), le module de véhicule télécommandé (400), et le deuxième émetteur-récepteur de protocole de signal, le quatrième émetteur-récepteur de protocole de signal (440) configuré pour utiliser le second protocole de données à la seconde vitesse de transmission de données sur la voie de transmission de signal (100), le quatrième émetteur-récepteur de protocole de signal (440) configuré en outre pour s'interfacer de manière fonctionnelle avec un second dispositif sous-marin ; et
b. une utilisation des émetteurs-récepteurs (320, 330, 430, 440) dans le premier module de communication de données (300) et le module de véhicule télécommandé (400) pour fournir de manière sélective une transmission de données entre le ROV (500) et le système distant du ROV à leurs vitesses de transmission de données respectives.

11. Procédé de communication entre un véhicule télécommandé (ROV) et un système distant du ROV selon la revendication 10, comprenant en outre :
a. une surveillance d'un état du ROV (500) en temps réel ; et
b. une utilisation du premier émetteur-récepteur de protocole de signal (320) et du troisième émetteur-récepteur de protocole de signal (430) pour fournir une voie de signalisation de données alternative si un premier évènement d'état prédéterminé survient ; et, éventuellement,
dans lequel l'évènement d'état prédéterminé comprend un besoin de redémarrer le ROV (500) ou un quelconque autre système en communication fonctionnelle avec le ROV (500) ; ou dans lequel l'évènement d'état prédéterminé comprend un besoin de ramener en ligne un système ROV hors ligne ou un système hors ligne en communication fonctionnelle avec le ROV (500) après qu'ils ont été mis en mode « hors tension » ou « basse puissance ».

12. Procédé de communication entre un véhicule télécommandé (ROV) et un système distant du ROV selon la revendication 10, comprenant en outre :
a. une poursuite d'une surveillance d'un état du ROV (500) ;
b. une détection d'une survenue d'un second évènement d'état prédéterminé ; et
c. un arrêt d'utilisation du premier émetteur-récepteur de protocole de signal (320) et du troisième émetteur-récepteur de protocole de signal (430) pour fournir une voie de signalisation de données alternative lors d'une détection de la survenue d'un second évènement d'état prédéterminé.

13. Procédé de communication entre un véhicule télécommandé (ROV) et un système distant du ROV selon la revendication 10, comprenant en outre :
a. une utilisation concurrente du premier émetteur-récepteur de protocole de signal (320) et du troisième émetteur-récepteur de protocole de signal (430) à la première vitesse de transmission de données et du deuxième émetteur-récepteur de protocole de signal (330) et du quatrième émetteur-récepteur de protocole de signal (440) à la seconde vitesse de transmission de données ; et
b. une interconnexion des premier et troisième émetteurs-récepteurs de protocoles de signaux (320, 430) avec les deuxième et quatrième émetteurs-récepteurs de protocoles de signaux (330, 440) pour des informations de diagnostics sous-marins.

14. Procédé de communication entre un véhicule télécommandé (ROV) et un système distant du ROV selon la revendication 10, comprenant en outre :
a. une activation uniquement du second protocole de données à la seconde vitesse de transmission de données ;
b. un ajout d'un module protocole rapide à protocole lent (444) ; et
c. une utilisation du module protocole rapide à protocole lent (444) pour permettre une transmission de données de protocole lente ; et, éventuellement,
dans lequel la transmission de données de protocole lente autorisée comprend une RS-232, une RS-422, ou une RS-485.

15. Procédé de communication entre un véhicule télécommandé (ROV) et un système distant du ROV selon la revendication 10, comprenant en outre :
a. une utilisation du premier protocole de données pour communiquer avec un système principal de ROV à la première vitesse de transmission de données ;
b. une utilisation du premier protocole de données pour communiquer avec un outil (501) sous-marin à la première vitesse de transmission de données ; et
c. une utilisation du second protocole de données pour communiquer avec des systèmes moins importants à la seconde vitesse de transmission de données.
